# FASCICULE DE BREVET EUROPEEN

(11) **EP 4 297 993 B1**
(45) Date de publication et mention de la délivrance du brevet: **25.11.2026**
(21) Numéro de dépôt: 22703017.8
(22) Date de dépôt: 04.01.2022
(51) Int. Cl.: B60L 3/00, B60L 58/26, H01M 10/613, H01M 10/625, H01M 10/44, H01M 10/48, H01M 10/63, H01M 10/65

(54) **PROCEDE ET DISPOSITIF DE CONTROLE D'UNE BATTERIE EVITANT UN EMBALLEMENT THERMIQUE**
VERFAHREN UND VORRICHTUNG ZUR STEUERUNG EINER BATTERIE ZUR VERHINDERUNG VON THERMISCHEM DURCHGEHEN
METHOD AND DEVICE FOR CONTROLLING A BATTERY TO PREVENT THERMAL RUNAWAY

(30) Priorité: 26.02.2021 FR 2101872
(43) Date de publication de la demande: 03.01.2024
(73) Titulaire: Stellantis Auto SAS, 78300 Poissy (FR)
(72) Inventeur: BALENGHIEN, Olivier, 93390 Clichy sous Bois (FR); PIRES, Ludovic, 78300 Poissy (FR)
(74) Mandataire: PSIP
(86) Numéro de dépôt international: PCT/FR2022/050016
(87) Numéro de publication internationale: WO 2022/180310

(56) Documents cités:
- EP-A1- 2 937 921
- KR-A- 20200 021 610
- US-A1- 2014 158 340
- US-B1- 10 392 018

## Description

La présente invention revendique la priorité de la demande française N°2101872 déposée le 26.02.2021 dont le contenu (texte, dessins et revendications) est ici incorporé par référence.

L'invention concerne les véhicules à traction ou propulsion électrique, comprenant une batterie principale alimentant une machine motrice électrique.

De telles batteries, par exemple comprenant des cellules de stockage d'énergie électrique de type lithium-ion (ou Li-ion), sont susceptibles de se dégrader rapidement lorsque la température de ses cellules dépasse un seuil haut, voire d'amorcer le début d'un emballement thermique pouvant provoquer un incendie de la batterie. Pour remédier à cet inconvénient, on applique des stratégies de contrôle de cette température.

Par exemple, on connait du document de brevet EP-A1-3613624 un dispositif de contrôle d'un véhicule à partir d'une température de batterie, ce dispositif déclenchant un ventilateur de refroidissement lorsque cette température dépasse un premier seuil, puis diminuant la vitesse de rotation d'une machine motrice électrique alimentée par la batterie lorsque cette température dépasse un second seuil supérieur au premier seuil.

Par ailleurs, le document EP 2 937 921 A1 décrit un véhicule dont le système de conditionnement d'air adapte son fonctionnement selon la température de la batterie, afin d'optimiser le refroidissement de celle-ci tout en limitant la consommation énergétique. Le document US 2014/158340 A1 divulgue quant à lui un module de stockage d'énergie combinant refroidissement passif par matériau à changement de phase et refroidissement actif par circulation de fluide, le tout piloté selon des seuils de température pour éviter l'emballement thermique. D'autre part, le document KR 2020 0021610 A propose un système qui, en cas de surchauffe de la batterie, limite la puissance du moteur, active un ventilateur de refroidissement et informe l'utilisateur, afin de prévenir tout risque de dégradation. Enfin, le document US 10 392 018 B1 enseigne un véhicule où, si la batterie ne peut pas absorber toute l'énergie de freinage régénératif, le système dirige cette énergie vers des éléments de chauffage ou de refroidissement pour maintenir la batterie à température.

Malheureusement cette stratégie mise en œuvre par ce dispositif de contrôle ne permet pas d'éviter un emballement thermique, car le fait de diminuer la vitesse de la machine motrice peut être contre-productif, cela pouvant augmenter en conséquence le couple de la machine motrice et donc le courant traversant les cellules de la batterie, le risque d'incendie étant alors augmenté. Qui plus est, d'autres organes du véhicule peuvent consommer du courant et participant ainsi à la croissance de cette température malgré les mesures prises.

En outre, cette stratégie présentée reste silencieuse pour le cas où à la fois l'action du ventilateur et la diminution de la vitesse ne suffisent pas à faire diminuer la température.

Le but de l'invention est de remédier à ce manque en proposant un dispositif de contrôle et procédé contrôle évitant ce risque d'emballement thermique.

A cet effet, l'invention a pour objet un procédé de contrôle d'une batterie d'un véhicule comprenant :
- la batterie,
- un moyen de mesure et de surveillance de la température de la batterie,
- un moyen de refroidissement de la batterie,

ce procédé exécutant :
   - une première étape actionnant le moyen de refroidissement en régulation sur une consigne en température de la batterie lorsque la température de la batterie est inférieure à un premier seuil haut,
   - une deuxième étape actionnant le moyen de refroidissement à son maximum lorsque cette température dépasse le premier seuil haut,
ce procédé, lorsque la température dépasse un deuxième seuil haut strictement supérieur au premier seuil haut, exécutant une troisième étape qui simultanément:
   - limite la puissance sortante de la batterie principale, et
   - maintient le moyen de refroidissement au maximum de ses possibilités de refroidissement.

Ainsi l'invention passe d'une régulation en température de la batterie dite en boucle fermée, c'est-à-dire en régulant le moyen de refroidissement autour d'une consigne en température à partir de la température de la batterie mesurée, à un fonctionnement du moyen de refroidissement dit en boucle ouverte, c'est-à-dire indépendamment de la température de la batterie mesurée. Ce fonctionnement en boucle ouverte impose un fonctionnement du moyen de refroidissement au maximum de ses possibilités, c'est-à-dire que le procédé pousse le moyen de refroidissement à son efficacité maximale. Par exemple ce moyen de refroidissement comprend une pompe électrique de circulation d'un fluide caloporteur, cette pompe étant alors contrôlée de sorte à tourner à sa vitesse maximale techniquement permise.

En même temps, la puissance sortante de la batterie, c'est-à-dire la puissance de la batterie disponible pour les, ou certains consommateurs du véhicule, est bridée par exemple à une valeur prédéterminée : ainsi, quel que soit l'état ou le fonctionnement individuel de ces actionneurs, qu'ils soient défectueux ou non, la probabilité pour que la température de la batterie diminue est très forte. Cette puissance sortante est bridée mais pas inhibée : En effet, accessoirement mais pas nécessairement, une partie de cette puissance restante peut être utilisée pour alimenter le moyen de refroidissement.

Plusieurs méthodes et moyens pour limiter cette puissance sortante seront décrites dans la description détaillée.

Selon un mode de réalisation de l'invention, ce procédé exécute une étape d'avertissement du conducteur l'incitant à moins consommer de puissance tant que la température est strictement supérieure au premier seuil haut.

En effet, cette étape est comparable à un traitement préventif, autorisant la possibilité d'éviter que le procédé exécute la troisième étape qui impacte potentiellement le ressentit du conducteur. Mais pour des raisons de sureté de fonctionnement, le procédé ne peut pas s'appuyer entièrement sur cette étape d'avertissement puisque la diminution de la puissance consommée consécutive ne dépend que de la volonté, ou de l'attention du conducteur. L'avertissement consiste par exemple à allumer un voyant ou déclencher une alarme perceptible par le conducteur.

Selon un mode de réalisation de l'invention, ce procédé sort de la deuxième étape pour revenir à la première étape lorsque la température redevient strictement inférieure à un premier seuil bas strictement inférieur au premier seuil haut.

Cette différence entre ces deux seuils a pour conséquence de créer un effet hystérésis sur la transition entre les étapes du procédé : Lorsque le procédé sort de la deuxième étape pour revenir à la première étape, il devra attendre que la température de la batterie remonte avant de retourner à la deuxième étape. Ce principe est reproduit pour la sortie de la troisième et quatrième étape décrites ci-dessous.

Selon un mode de réalisation de l'invention, ce procédé sort de la troisième étape pour revenir à la première étape lorsque la température est strictement inférieure à un deuxième seuil bas strictement inférieur au deuxième seuil haut.

Selon un mode de réalisation de l'invention, le véhicule comprend un moyen de récupération d'énergie électrique au freinage rechargeant la batterie. Alors la troisième étape inhibe en outre le moyen de récupération d'énergie électrique.

En effet, cette énergie électrique récupérée par la batterie, et que l'on nommera puissance entrante par opposition à la puissance sortante, est également une source d'élévation de la température de la batterie, du fait qu'elle engendre une puissance qui peut être brève mais de valeur élevée, provoquant (à tension identique) un courant traversant la batterie sur un temps court, mais avec une très forte intensité. Hors la température de la batterie est liée à l'intensité du courant, au carré de cette intensité plus précisément. Il est donc avantageux d'inhiber cette source d'élévation de température de la batterie.

Selon l'invention, le véhicule comprend une deuxième batterie, alimentant le moyen de refroidissement. Alors, lorsque la température dépasse un troisième seuil haut strictement supérieur au deuxième seuil haut, ce procédé exécute une quatrième étape qui simultanément:
- réduit la puissance sortante et entrante de la batterie à une puissance nulle,
- maintient le moyen de refroidissement au maximum de ses possibilités de refroidissement.

En effet, au-delà de ce troisième seuil haut, il est certain que les cellules de la batterie se dégradent, et la probabilité d'avoir un emballement thermique de ces cellules suivi d'un incendie est trop élevée. Dans ce cas, et parce que l'on a la deuxième batterie, le procédé annule toute puissance entrante ou sortante de la (première) batterie. En fait, cette quatrième étape procède à un isolement électrique de la batterie. Il est alors important que la deuxième batterie soit présente de sorte à alimenter le moyen de refroidissement, et tout dispositifs relatifs à la sécurité du véhicule puisque ce dernier n'est pas nécessairement à vitesse nulle, mais peut être par exemple dans un mode de roulage en « roue libre ».

Ce procédé sort de la quatrième étape pour revenir à la première étape lorsque la température redevient strictement inférieure à un troisième seuil bas strictement inférieur au troisième seuil haut.

Par exemple, la troisième étape limite la puissance sortante de la batterie entre 40 et 60% de la puissance maximale délivrable par cette batterie.

Cette puissance maximale délivrable est par exemple une puissance maximale délivrable prédéterminée pour la batterie dans un état de charge pleine et à neuf, mais plus avantageusement le procédé comprend une étape qui détermine cette puissance maximale délivrable à tout instant, et en particulier à l'instant où la température dépasse le deuxième seuil haut strictement supérieur au premier seuil haut. Cette détermination est par exemple fonction de la température de la batterie, de son état de charge, et de son état de vieillissement. L'état de vieillissement et par exemple fonction de l'état de santé de la batterie, du nombre de cycle de recharge réalisés, et d'autres paramètres connus de l'homme du métier.

En particulier, la troisième étape limite la puissance sortante de la batterie à 40%, ou 50% ou 60% de la puissance maximale délivrable par cette batterie BR1.

L'invention a également pour objet un dispositif de contrôle comprenant les moyens d'acquisition, de traitement par instructions logicielles stockées dans une mémoire ainsi que les moyens de commande requis à mise en oeuvre du procédé tel que précédemment décrit.

L'invention a également pour objet un programme d'ordinateur comprenant les instructions qui conduisent le dispositif de contrôle précédemment décrit à exécuter les étapes du procédé précédemment décrit.

L'invention a également pour objet un support lisible par ordinateur, sur lequel est enregistré le programme d'ordinateur précédemment décrit.

L'invention a également pour objet un véhicule automobile à propulsion électrique comprenant un dispositif de contrôle tel que précédemment décrit, ce véhicule étant tel que décrit ci-après.

D'autres particularités et avantages apparaîtront à la lecture de la description ci-après d'un mode particulier de réalisation, non limitatif de l'invention, faite en référence aux figures dans lesquelles :
[Fig 1] : représente le schéma d'un véhicule pour lequel le procédé selon l'invention s'applique, et comprenant le dispositif de contrôle.
[Fig 2] : représente un grafcet du procédé selon l'invention, dans sa version la plus complète.

Il est à garder à l'esprit que les figures sont données à titre d'exemples et ne sont pas limitatives de l'invention. Elles constituent des représentations schématiques de principe destinées à faciliter la compréhension de l'invention. En outre, dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées. Les références des éléments inchangés ou ayant la même fonction sont communes à toutes les figures, et les variantes de réalisation.

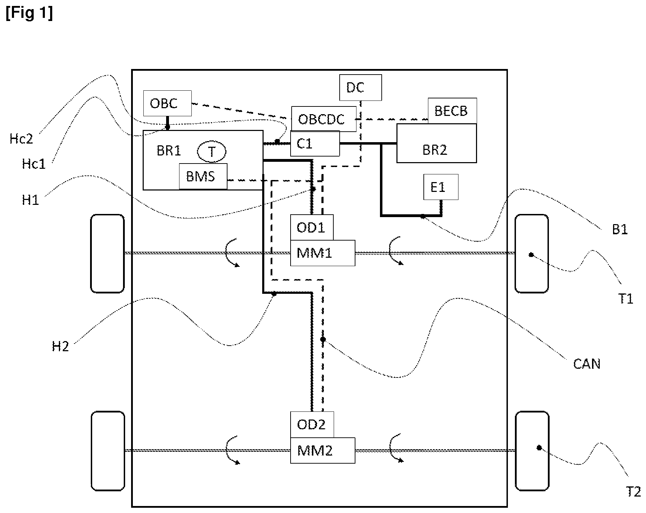

La figure 1 représente un schéma d'un véhicule selon l'invention et représente un exemple détaillé de réalisation d'un système de batterie appliqué à un véhicule.

Ce véhicule comprend :
- une batterie principale BR1, dite de traction, rechargeable, fonctionnant sous une première haute tension continue par exemple 400V, ou encore entre 400V et 800V, et comprenant un capteur de température revoyant une valeur T de température, un capteur de courant, un capteur de tension, un module comprenant une cellule électrochimique de stockage d'énergie électrique, un moyen de refroidissement du module et/ou de la cellule, par exemple par un fluide caloporteur circulant dans un circuit en contact thermique avec le module et/ou la cellule,
- un moyen de contrôle de la batterie principale BMS, ici intégré à la batterie principale BR1, et apte par exemple à déterminer un état de charge de la batterie à partir des valeurs mesurées par les capteurs de température, courant, tension,
- un premier réseau électrique haute tension comprenant des faisceaux haute tension Hc1, Hc2, H1, H2 travaillant à la tension de la batterie principale BR1,
- un chargeur embarqué OBC, comprenant son propre moyen de contrôle, et étant couplé à la batterie principale par un premier faisceau haute tension de charge Hc1,
- un convertisseur de courant C1, comprenant un moyen de contrôle du convertisseur OBCDC, et étant couplé à la batterie principale par un second faisceau haute tension de charge Hc2,
- un deuxième réseau électrique basse tension continue comprenant un faisceau basse tension B1,
- une batterie secondaire BR2, dite de servitude, rechargeable, fonctionnant sous une deuxième basse tension continue par exemple 12V, ou encore entre 12V et 48V, et comprenant un deuxième capteur de température, de courant, de tension, un deuxième module comprenant une deuxième cellule électrochimique de stockage d'énergie électrique, un deuxième moyen de refroidissement du deuxième module et/ou de la deuxième cellule, par exemple par un fluide caloporteur circulant dans un deuxième circuit en contact thermique avec le deuxième module et/ou la deuxième cellule, cette batterie secondaire étant couplée au convertisseur de courant C1 par le faisceau basse tension B1, cette batterie secondaire BR2 comprenant en outre un boîtier BECB apte par exemple à déterminer un état de charge de la batterie secondaire BR2 à partir des valeurs mesurées par les deuxièmes capteurs de température, courant, tension,
- un équipement électrique E1 du véhicule alimenté par la batterie secondaire BR2 via le faisceau basse tension B1.

La partie sensible du capteur de température renvoyant une valeur T de température, et par exemple immergée dans le fluide caloporteur, à une sortie du circuit après que ce fluide soit réchauffé par le module ou la cellule de la batterie principale BR1. Mais ce capteur de température peut être positionné sur une autre partie de la batterie principale BR1, par exemple sur le module ou la cellule la moins bien refroidie. De même, il peut y avoir plusieurs de ces capteurs de température revoyant une valeur T de température moyenne. Le moyen de contrôle de la batterie principale BMS comprend par exemple un moyen de surveillance et/ou d'acquisition de cette valeur T de température.

Ce véhicule comprend également :
- une première chaîne de transmission comportant au moins une première machine motrice électrique MM1 comprenant un premier onduleur OD1, et fournissant du couple pour entraîner au moins un train T1 à partir de l'énergie stockée dans la batterie principale BR1 rechargeable, cette première machine motrice MM1 étant couplée à la batterie principale BR1 via le premier onduleur OD1 par un premier faisceau haute tension H1,
- optionnellement une deuxième chaîne de transmission comportant au moins une deuxième machine motrice électrique MM2 comprenant un deuxième onduleur OD2, et fournissant du couple pour entraîner au moins un deuxième train T2 à partir de l'énergie stockée dans la batterie principale BR1 rechargeable, ce cette deuxième machine motrice MM2 étant couplée à la batterie principale BR1 via le deuxième onduleur OD2 par un deuxième faisceau haute tension H2.

Ce véhicule comprend en outre :
- un réseau de communication CAN,
- un dispositif de contrôle DC, dit de supervision du véhicule.

Ce réseau de communication CAN, par exemple un bus de données série CAN pour l'acronyme anglais « Controller Area Network » mais d'autres type de bus sont envisageables, couple entre eux :
- le moyen de contrôle de la batterie principale BMS,
- le moyen de contrôle du chargeur embarqué OBC,
- le moyen de contrôle du convertisseur OBCDC,
- le boîtier BECB,
- un premier moyen de contrôle (non représenté) du premier onduleur OD1,
- un deuxième moyen de contrôle (non représenté) du deuxième onduleur OD2,
- le dispositif de contrôle DC.

Ainsi par exemple, le moyen de contrôle de la batterie principale BMS comprenant le moyen d'acquisition de la valeur T de température transmet, via ce réseau de communication CAN, la valeur T de température à n'importe quel moyen ou dispositif de contrôle couplé à ce réseau de communication CAN, et notamment au dispositif de contrôle DC.

Ce réseau de communication CAN est représenté sur la figure 1 par un trait en pointillés, alors que le premier réseau électrique haute tension et le deuxième réseau électrique basse tension sont représentés par un trait plein « gras ».

On notera que le premier réseau électrique haute tension comprend :
- le premier faisceau haute tension de charge Hc1,
- le second faisceau haute tension de charge Hc2,
- le premier faisceau haute tension H1,
- le deuxième faisceau haute tension H2.

Cette architecture de faisceaux haute tension n'est qu'un exemple, et d'autres architectures économisant des longueurs de faisceaux sont bien entendu envisageables comme par exemple fusionner le premier faisceau haute tension H1 avec le deuxième faisceau haute tension H2, l'idée subjacente étant également de n'avoir qu'une sortie (prise) de puissance haute tension sur la batterie principale BR1 par exemple.

On notera que le deuxième réseau électrique basse tension comprend :
- le faisceau basse tension B1.

Cette architecture de faisceaux basse tension n'est qu'un exemple, et d'autres architectures sont bien entendu envisageables par exemple en prenant en compte le fait que le véhicule comprend plus qu'un seul équipement électrique E1.

On notera en particulier un équipement électrique spécifique à l'invention, qui est par exemple une pompe électrique E1 de circulation du fluide caloporteur du moyen de refroidissement de la batterie principale BR1. Ce fluide caloporteur est par exemple sous forme liquide ou gazeuse, par exemple de l'eau glycolée, ou un fluide diélectrique immergeant directement les cellules.

Ce deuxième réseau électrique basse tension est notamment le réseau de bord du véhicule, qui par exemple alimente tous les moyens de contrôle ou dispositifs de contrôle du véhicule.

Le premier réseau électrique haute tension et le deuxième réseau électrique basse tension sont deux réseaux fonctionnant respectivement sous la première tension et la deuxième tension, ces tensions étant par exemple différentes comme précédemment décrit, le convertisseur de courant C1 adaptant la tension d'un réseau à l'autre selon le sens du courant souhaité, dans le cas d'un convertisseur C1 réversible pour transférer du courant de la batterie secondaire BR2 à la batterie principale BR1 et inversement. Ce convertisseur de courant C1 est par exemple un convertisseur de courant continu / continu, mais pas nécessairement. Sur la figure 1 ce convertisseur C1 est représenté en dehors de la batterie principale BR1 et de la batterie secondaire BR2, mais ce n'est pas obligatoire et il peut être intégré par exemple dans la batterie principale BR1, au niveau de ses modules ou même de ses cellules.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comprenant une chaîne de transmission comportant au moins une machine motrice électrique produisant du couple pour entraîner au moins un train (par exemple de roues). Par conséquent, l'invention concerne au moins les véhicules terrestres.

On entend par « machine motrice électrique », dans tout le texte de ce document, une machine (ou un moteur) électrique agencé(e) de manière à fournir ou récupérer du couple pour déplacer un véhicule, soit seul(e) soit en complément d'au moins une éventuelle autre machine motrice électrique ou thermique (comme par exemple un moteur thermique (réacteur, turboréacteur ou moteur chimique)).

On entend ici par équipement électrique E1, dans tout le texte de ce document, un équipement électrique alimenté par le réseau basse tension de la batterie secondaire BR2, cette alimentation pouvant se faire sans utiliser le convertisseur de courant C1 et donc sans l'aide de la batterie principale BR1, et qui a besoin d'une quantité d'énergie électrique plus ou moins forte pour fonctionner et qui peut éventuellement assurer une fonction sécuritaire.

Dans l'exemple illustré non limitativement sur l'unique figure, la chaîne de transmission est de type tout électrique et peut comprendre une unique machine motrice électrique MM1. Mais l'invention n'est pas limitée à ce type de chaîne de transmission. En effet, la chaîne de transmission pourrait être de type hybride en comportant en complément une machine motrice thermique associée à au moins un train (par exemple le second T2), ou, comme illustré, une deuxième machine motrice MM2.

La chaîne de transmission comprend ici, en complément de la première machine motrice électrique MM1, un arbre de transmission et des moyens de couplage de cette première machine motrice à cet arbre de transmission. Le contrôle d'au moins la première machine motrice électrique MM1 et des moyens de couplage est assuré par le un dispositif de contrôle DC, dit de supervision du véhicule, via le réseau de communication CAN. Le dispositif de contrôle DC contrôle le premier onduleur OD1 de la première machine motrice MM1.

Les moyens de couplage sont ici chargés de coupler/découpler la première machine motrice électrique MM1 à/de l'arbre de transmission, sur ordre du dispositif de contrôle DC, afin de communiquer du couple qu'elle produit et qui est défini par une consigne (de couple ou de régime), grâce à l'énergie électrique stockée dans la batterie principale BR1, à l'arbre de transmission. Ce dernier est ici couplé au premier train T1 (ici de roues).

Par exemple, le premier train T1 est situé à l'avant du véhicule V, et de préférence. Mais dans une variante ce premier train T1 pourrait être situé à l'arrière du véhicule.

Les moyens de couplage peuvent, par exemple, être un mécanisme à crabots ou un embrayage ou un convertisseur de couple hydraulique ou encore un frein. Ils peuvent prendre au moins deux états de couplage : un premier (couplé) dans lequel ils assurent le couplage de la première machine motrice électrique MM1 à l'arbre de transmission et un second (découplé) dans lequel ils découplent la première machine motrice électrique MM1 de l'arbre de transmission. On notera qu'ils peuvent, également et éventuellement, prendre au moins un état intermédiaire (par exemple pour un glissement d'embrayage).

En cas de présence de la deuxième machine motrice MM2, le contrôle de cette deuxième machine motrice MM2 se fera, mutatis mutandis de la même façon par le dispositif de contrôle DC.

La batterie principale BR1 est agencée pour stocker de l'énergie électrique sous la première tension. Elle peut notamment être rechargée via le chargeur embarqué OBC configuré en phase de recharge de sorte à recharger la batterie principale BR1, ce chargeur embarqué OBC étant couplé à un réseau de distribution de courant terrestre via par exemple un cordon électrique amovible dédié raccordé au chargeur embarqué OBC d'une part, et à une borne de recharge ou une prise de courant du réseau de distribution de courant terrestre.

Les équipements électriques E1 du véhicule consomment de l'énergie stockée sous la deuxième tension dans la batterie secondaire BR2.

On comprendra par batterie secondaire, dite de servitude BR2 dans tout le texte de ce document, une batterie fonctionnant sous la deuxième tension (notamment 12V) qui est inférieure à la première tension.

On comprendra par batterie principale, dite de traction BR1 dans tout le texte de ce document, une batterie fonctionnant sous la première tension qui est supérieure à la deuxième tension, et qui alimente en courant la ou les machines motrices MM1, MM2. Cette batterie principale BR1 a une capacité de stockage d'énergie généralement très supérieure à la batterie secondaire BR2.

On comprendra par batterie, dans tout le texte de ce document, un ensemble comprenant au moins un module de batterie contenant au moins une cellule électrochimique. Cette batterie comprend éventuellement des moyens électriques ou électroniques pour la gestion d'énergie électrique de ce au moins un module, comme par exemple le boîtier BECB de détermination de l'état de charge. Lorsqu'il y a plusieurs modules, ils sont regroupés dans un bac ou carter et forment alors un bloc batteries, ce bloc batteries étant souvent désigné par l'expression anglaise « pack batteries », ce carter contenant généralement une interface de montage, et des bornes de raccordement.

Par ailleurs, on comprendra par cellule électrochimique dans tout le texte de ce document, des cellules générant du courant par réaction chimique, par exemple de type lithium-ion (ou Li-ion), de type Ni-Mh, ou Ni-Cd ou encore plomb.

Le chargeur embarqué OBC est représenté déporté de la batterie principale BR1, mais ce n'est pas obligatoire : il peut être intégré entièrement dans la batterie principale BR1, au niveau même des modules ou des cellules, tout comme les onduleurs OD1, OD2, et le moyen de contrôle du convertisseur OBCDC.

Le chargeur embarqué OBC, tout comme les onduleurs OD1, OD2 et convertisseur C1, comprennent par exemple une série de transistors de puissance disposés en pont en « H », et un moyen de contrôle pilotant chaque transistor. Ce moyen de contrôle pilotant chaque transistor est par exemple en interface avec le réseau de communication CAN pour échanger des données ou des commandes avec le dispositif de contrôle DC.

Ce chargeur embarqué OBC est par exemple un convertisseur redresseur de courant alternatif - continue, et peut piloter la recharge en tension, en courant, ou tout autre cycle comprenant la phase de recharge, une phase de décharge, une phase de relaxation de la batterie principale BR1.

Ainsi, ce dispositif de contrôle DC, par le moyen du réseau de communication CAN, peut notamment désactiver la recharge ou limiter une puissance consommée par l'un quelconque des onduleurs OD1, OD2, du convertisseur C1, ou du chargeur embarqué OBC.

En variante ou en combinaison, le véhicule comprend un moyen de limitation de la puissance électrique sortante ou entrante du module ou de la cellule de cette batterie principale BR1. Ce moyen de limitation est par exemple intégré dans le dispositif de contrôle DC contrôlant la puissance consommée par l'un quelconque des onduleurs OD1, OD2, du convertisseur C1, ou du chargeur embarqué OBC, ces derniers pouvant être tous intégrés complétement, partiellement, ou pas du tout à la batterie principale BR1.

En variante encore, non représentée, ce moyen de limitation comprend une série d'interrupteurs agencés de sorte à pouvoir isoler électriquement le module ou la cellule, et le dispositif de contrôle DC contrôle l'état de ces interrupteurs.

En variante encore, non représentée, ce moyen de limitation comprend un circuit électronique de limitation du courant traversant le module ou la cellule, le dispositif de contrôle DC contrôlant ce circuit électronique. Ce circuit électronique est avantageusement intégré dans la batterie principale BR1, et notamment dans le moyen de contrôle de la batterie principale BMS mais pas nécessairement. D'autres configurations ou combinaisons sont envisageables.

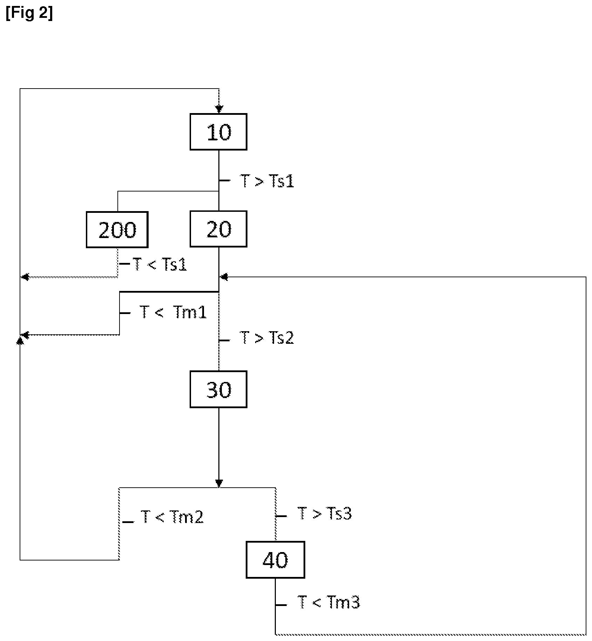

La figure 2 représente un grafcet du procédé selon l'invention. Ce procédé est mis en oeuvre par exemple au moyen du dispositif de contrôle DC. Mais ce n'est pas obligatoire, et comme explicité par de nombreux exemples en référence à la figure 1, cette mise en oeuvre peut se faire par plusieurs dispositifs de contrôle répartis dans le véhicule, ou en partie regroupés dans un calculateur dédié, ces calculateurs recevant les données nécessaires de différents capteurs disposés dans le véhicule, via le réseau CAN par exemple.

Ces calculateurs sont par exemple :
- le moyen de contrôle de la batterie principale BMS,
- le moyen de contrôle du chargeur embarqué OBC,
- le moyen de contrôle du convertisseur OBCDC,
- le boîtier BECB,
- le premier moyen de contrôle (non représenté) du premier onduleur OD1,
- le deuxième moyen de contrôle (non représenté) du deuxième onduleur OD2,
- le dispositif de contrôle DC.

Ces calculateurs comprennent un éventuel programme dédié, par exemple. Par conséquent, un calculateur ou dispositif de contrôle DC selon l'invention, peuvent être réalisés sous la forme de modules logiciels (ou informatiques (ou encore « software »)), ou bien de circuits électroniques (ou « hardware »), ou encore d'une combinaison de circuits électroniques et de modules logiciels ».

Le dispositif de contrôle DC et/ou les calculateurs, comprennent les moyens d'acquisition, de traitement par instructions logicielles stockées dans une mémoire ainsi que les moyens de commande requis à mise en oeuvre du procédé selon l'invention.

Ainsi l'invention porte sur un procédé de contrôle d'une batterie d'un véhicule comprenant :
- la batterie BR1, c'est-à-dire la batterie principale BR1 précédemment décrite,
- le moyen de mesure et de surveillance de la température T de la batterie BR1, c'est-à-dire le capteur de température revoyant la valeur T de température de la batterie BR1 précédemment décrit,
- le moyen de refroidissement E1 de la batterie BR1,

ce procédé exécutant :
   - une première étape 10 actionnant le moyen de refroidissement E1 en régulation sur une consigne en température de la batterie BR1 lorsque la température T de la batterie BR1 est inférieure à un premier seuil haut Ts1,
   - une deuxième étape 20 actionnant le moyen de refroidissement E1 à son maximum lorsque cette température T dépasse le premier seuil haut Ts1,
ce procédé, lorsque la température T dépasse un deuxième seuil haut Ts2 strictement supérieur au premier seuil haut Ts1, exécutant une troisième étape 30 qui simultanément:
   - limite la puissance sortante de la batterie principale BR1, et
   - maintient le moyen de refroidissement E1 au maximum de ses possibilités de refroidissement.

Ce procédé exécute une étape 200 d'avertissement du conducteur l'incitant à moins consommer de puissance tant que la température T est strictement supérieure au premier seuil haut Ts1.

Ce procédé sort de la deuxième étape 20 pour revenir à la première étape 10 lorsque la température T redevient strictement inférieure à un premier seuil bas Tm1 strictement inférieur au premier seuil haut Ts1.

Ce procédé sort de la troisième étape 30 pour revenir à la première étape 10 lorsque la température T redevient strictement inférieure à un deuxième seuil bas Tm2 strictement inférieur au deuxième seuil haut Ts2.

Par exemple, le véhicule comprend un moyen de récupération d'énergie électrique au freinage rechargeant la batterie BR1. Alors la troisième étape 30 inhibe en outre le moyen de récupération d'énergie électrique.

Ce moyen de récupération d'énergie électrique au freinage comprend par exemple la première machine électrique MM1 comprenant le premier onduleur OD1 : Cette première machine motrice MM1 est par exemple réversible en mode générateur de courant et peut, via le contrôle du premier onduleur OD1 par le dispositif de contrôle DC, transformer l'énergie cinétique du véhicule venant de l'arbre de transmission de la première machine électrique MM1 en une énergie électrique rechargeant la batterie principale BR1, ce qui a inévitablement pour effet de freiner le véhicule si cette première machine motrice MM1 est l'unique machine motrice du véhicule.

Un deuxième moyen de récupération d'énergie électrique au freinage comprend par exemple la deuxième machine motrice MM2 comprenant le deuxième onduleur OD2 lorsque le véhicule en est équipé, de la deuxième machine motrice MM2 étant réversible de la même manière. Le dispositif de contrôle DC peut alors choisir l'un ou l'autre ou une répartition des deux moyens de récupération, de sorte à optimiser le rendement de ces moyens de récupération.

Par exemple le véhicule comprend une deuxième batterie BR2, c'est-à-dire la batterie secondaire BR2, alimentant le moyen de refroidissement E1. Alors, lorsque la température T dépasse un troisième seuil haut Ts3 strictement supérieur au deuxième seuil haut Ts2, ce procédé exécute une quatrième étape 40 qui simultanément:
- réduit la puissance sortante et entrante de la batterie BR1 à une puissance nulle,
- maintient le moyen de refroidissement E1 au maximum de ses possibilités de refroidissement.

Ce procédé sort de la quatrième étape 40 pour revenir à la première étape 10 lorsque la température T redevient strictement inférieure à un troisième seuil bas Tm3 strictement inférieur au troisième seuil haut Ts3.

Par exemple, la troisième étape 30 limite la puissance sortante de la batterie BR1 entre 40 et 60% de la puissance maximale délivrable par cette batterie BR1.

En particulier, la troisième étape 30 limite la puissance sortante de la batterie BR1 à 40%, ou 50% ou 60% de la puissance maximale délivrable par cette batterie BR1.

Comme vu précédemment, le moyen de refroidissement comprend par exemple :
- un circuit de fluide caloporteur en contact thermique avec le module et/ou la cellule de la batterie principale BR1,
- une pompe électrique E1 de circulation du fluide caloporteur, alimentée électriquement par la batterie principale BR1 via notamment le convertisseur C1, mais en variante ou en combinaison avantageuse, alimentée par la batterie secondaire BR2 sans passer par le convertisseur C1,
- un capteur de température renvoyant une valeur T de température, et par exemple immergé dans le fluide caloporteur, à une sortie du circuit après que ce fluide soit réchauffé par le module ou la cellule de la batterie principale BR1.

Mais ce capteur de température peut être positionné sur une autre partie de la batterie principale BR1, par exemple sur le module ou la cellule la moins bien refroidie, comme vu précédemment.

Ainsi le dispositif de contrôle DC peut ordonner au moyen de contrôle de la batterie principale BMS le pilotage de cette pompe électrique E1 à son régime maximal.

En variante ou en combinaison, ce moyen de refroidissement peut comprendre, couplé au circuit de fluide caloporteur, une vanne de régulation de débit. Ainsi le dispositif de contrôle DC peut ordonner au moyen de contrôle de la batterie principale BMS le pilotage de cette vanne à son ouverture maximale et/ou pompe électrique E1 à son régime maximal.

En variante ou en combinaison, ce véhicule comprend une vanne de couplage et le deuxième circuit du deuxième moyen de refroidissement est couplé au (premier) circuit de fluide caloporteur par cette vanne de couplage de façon à permettre d'augmenter au moins temporairement l'efficacité de refroidissement du (premier) moyen de refroidissement, cette vanne de couplage étant également directement ou indirectement contrôlée par le dispositif de contrôle DC. En variante encore, d'autres couplages sont envisageables, notamment le couplage avec un circuit de refroidissement du moteur à combustion interne s'il est présent, pour un véhicule à motricité hybride par exemple.

A titre d'exemple, pour une température T de la batterie principale BR1 comprenant des cellules de type lithium-ion (ou Li-ion), cette température T étant dans cet exemple celle de la température du fluide caloporteur sortant du moyen de refroidissement de la batterie principale BR1, ce fluide étant de l'eau glycolée, on aura les valeurs de seuil suivantes :
- premier seuil haut Ts1 entre 120°C et 130°C, notamment égal à 125°C,
- deuxième seuil haut Ts2 entre 125°C et 135°C, notamment égal à 130°C,
- troisième seuil haut Ts3 entre 140°C et 155°C, notamment égal à 150°C,
- premier seuil bas Tm1 entre 110°C et 115°C, notamment égal à 110°C,
- deuxième seuil bas Tm2 entre 115°C et 120°C, notamment égal à 115°C,
- troisième seuil bas Tm3 entre 130°C et 140°C, notamment égal à 135°C, et
- $Ts 1 < Ts 2 < Ts 3 ,$ et
- Tm1< Ts1 ; Tm2 < Ts2 ; Tm3 < Ts3.

Plus généralement, pour cette même technologie de batterie :
- Tm1 = 0,9 X Ts1,
- Tm2 = 0,9 X Ts2,
- Tm3 = 0,9 X Ts3, et
- Ts1 <Ts2<Ts3, Ts3 étant au maximum à 155°C.

Bien entendu, selon le type de batterie / cellules, et le moyen de refroidissement utilisé, ces seuils seront adaptés en fonction de la marge de sécurité que l'on souhaite vis-à-vis de la protection de la batterie.

Pour des véhicules à propulsion électrique légers, c'est-à-dire des véhicules pour particuliers et non utilitaires, ce type de batterie peut délivrer des puissances allant jusqu'à 150 Kw, et plus de 350 Kw pour des camions. Une limitation de la batterie principale BR1 à 50% de sa puissance maximale, en prenant l'hypothèse des valeurs ci-dessus (c'est-à-dire à neuf, sans prendre en compte la température T, le vieillissement, l'état de charge) on aura donc une limitation de 75Kw pour les véhicules légers, et 175Kw pour des camions, en ordre de grandeur.

L'invention a également pour objet un programme d'ordinateur comprenant les instructions qui conduisent le dispositif de contrôle DC précédemment décrit à exécuter les étapes du procédé précédemment décrit.

L'invention a également pour objet un support lisible par ordinateur, sur lequel est enregistré le programme d'ordinateur précédemment décrit.

## Revendications

1. Procédé de contrôle d'une batterie d'un véhicule comprenant :
- la batterie (BR1),
- un moyen de mesure et de surveillance d'une température (T) de la batterie (BR1),
- un moyen de refroidissement (E1) de la batterie (BR1),
- une deuxième batterie BR2 alimentant le moyen de refroidissement (E1),
ce procédé exécutant :
- une première étape (10) contrôlant le moyen de refroidissement (E1) en régulation sur une consigne en température de la batterie (BR1) lorsque la température (T) de la batterie (BR1) est inférieure à un premier seuil haut (Ts1),
- une deuxième étape (20) actionnant le moyen de refroidissement (E1) à son maximum lorsque cette température (T) dépasse le premier seuil haut (Ts1),
**caractérisé en ce que**, lorsque la température (T) dépasse un deuxième seuil haut (Ts2) strictement supérieur au premier seuil haut (Ts1), ce procédé exécute une troisième étape (30) qui simultanément:
- limite la puissance sortante de la batterie principale (BR1), et
- maintient le moyen de refroidissement (E1) au maximum de ses possibilités de refroidissement, et lorsque la température (T) dépasse un troisième seuil haut (Ts3) strictement supérieur au deuxième seuil haut (Ts2), ce procédé exécute une quatrième étape (40) qui simultanément :
- réduit la puissance sortante et entrante de la batterie (BR1) à une puissance nulle,
- maintient le moyen de refroidissement (E1) au maximum de ses possibilités de refroidissement.

2. Procédé selon la revendication précédente, exécutant une étape (200) d'avertissement du conducteur l'incitant à moins consommer de puissance tant que la température (T) est strictement supérieure au premier seuil haut (Ts1).

3. Procédé selon l'une des revendications précédentes, ce procédé sortant de la deuxième étape (20) pour revenir à la première étape (10) lorsque la température (T) redevient strictement inférieure à un premier seuil bas (Tm1) strictement inférieur au premier seuil haut (Ts1).

4. Procédé selon l'une des revendications précédentes, ce procédé sortant de la troisième étape (30) pour revenir à la première étape (10) lorsque la température (T) redevient strictement inférieure à un deuxième seuil bas (Tm2) strictement inférieur au deuxième seuil haut (Ts2).

5. Procédé selon l'une des revendications précédentes, le véhicule comprenant un moyen de récupération d'énergie électrique au freinage rechargeant la batterie (BR1), la troisième étape (30) inhibant en outre le moyen de récupération d'énergie électrique.

6. Procédé selon l'une des revendications précédentes, ce procédé sortant de la quatrième étape (40) pour revenir à la première étape (10) lorsque la température (T) redevient strictement inférieure à un troisième seuil bas (Tm3) strictement inférieur au troisième seuil haut (Ts3).

7. Procédé selon l'une des revendications précédentes, la troisième étape (30) limitant la puissance sortante de la batterie (BR1) entre 40 et 60% de la puissance maximale délivrable par cette batterie (BR1).

8. Procédé selon la revendication 7, la troisième étape (30) limitant la puissance sortante de la batterie (BR1) à 40%, ou 50% ou 60% de la puissance maximale délivrable par cette batterie (BR1).

9. Dispositif de contrôle (DC), **caractérisé en ce qu'**il comprend les moyens d'acquisition, de traitement par instructions logicielles stockées dans une mémoire ainsi que les moyens de commande requis à mise en œuvre du procédé selon l'une quelconque des revendications précédentes.

## Patentansprüche

1. Verfahren zum Steuern einer Fahrzeugbatterie, umfassend:
- die Batterie (BR1),
- Mittel zum Messen und Überwachen einer Temperatur (T) der Batterie (BR1),
- Mittel zum Kühlen (E1) der Batterie (BR1),
- eine zweite Batterie BR2, die das Kühlmittel (E1) speist,
wobei das Verfahren ausführt:
- einen ersten Schritt (10), der das Kühlmittel (E1) bei der Regulierung auf einen Temperatursollwert der Batterie (BR1) steuert, wenn die Temperatur (T) der Batterie (BR1) unterhalb eines ersten oberen Schwellenwerts liegt (Ts1),
- einen zweiten Schritt (20), der das Kühlmittel (E1) auf sein Maximum betätigt, wenn diese Temperatur (T) den ersten hohen Schwellenwert (Ts1) überschreitet, **dadurch gekennzeichnet, dass** dieses Verfahren, wenn die Temperatur (T) einen zweiten hohen Schwellenwert (Ts2) überschreitet, der wesentlich größer als der erste hohe Schwellenwert (Ts1) ist, einen dritten Schritt (30) ausführt, der gleichzeitig
- die Ausgangsleistung der Hauptbatterie (BR1) begrenzt, und
- das Kühlmittel (E1) auf dem Maximum seiner Kühlmöglichkeiten hält, und wenn die Temperatur (T) einen überschreitet Ein dritter hoher Schwellenwert (Ts3), der wesentlich größer ist als der zweite hohe Schwellenwert (Ts2), führt ein vierter Schritt (40) durch, der gleichzeitig Folgendes bewirkt: - Reduzierung der aus- und eingehenden Leistung der Batterie (BR1) auf Null, - Beibehaltung des Kühlmittels (E1) auf ein Maximum seiner Kühlmöglichkeiten.

2. Verfahren nach dem vorhergehenden Anspruch, das einen Schritt (200) zur Warnung des Fahrers ausführt, der ihn dazu veranlasst, weniger Leistung zu verbrauchen, solange die Temperatur (T) strikt oberhalb des ersten oberen Schwellenwerts (Ts1) liegt.

3. Verfahren nach einem der vorhergehenden Ansprüche, wobei das Verfahren aus dem zweiten Schritt (20) austritt, um zum ersten Schritt (10) zurückzukehren, wenn die Temperatur (T) wieder streng unter einen ersten niedrigen Schwellenwert (Tm1) zurückkehrt, der streng unter dem ersten hohen Schwellenwert (Ts1) liegt.

4. Verfahren nach einem der vorhergehenden Ansprüche, wobei das Verfahren aus dem dritten Schritt (30) austritt, um zu dem ersten Schritt (10) zurückzukehren, wenn die Temperatur (T) wieder streng unter einen zweiten niedrigen Schwellenwert (Tm2) zurückfällt, der streng unter dem zweiten hohen Schwellenwert (Ts2) liegt.

5. Verfahren nach einem der vorhergehenden Ansprüche, wobei das Fahrzeug eine Einrichtung zur Rückgewinnung von elektrischer Energie beim Bremsen aufweist, die die Batterie (BR1) auflädt, wobei der dritte Schritt (30) ferner die Einrichtung zur Rückgewinnung von elektrischer Energie blockiert.

6. Verfahren nach einem der vorhergehenden Ansprüche, wobei das Verfahren aus dem vierten Schritt (40) in den ersten Schritt (10) zurückkehrt, wenn die Temperatur (T) wieder streng unter einen dritten niedrigen Schwellenwert (Tm3) zurückkehrt, der streng unter dem dritten hohen Schwellenwert (Ts3) liegt.

7. Verfahren nach einem der vorhergehenden Ansprüche, wobei der dritte Schritt (30) die Ausgangsleistung der Batterie (BR1) auf 40 bis 60% der von dieser Batterie (BR1) abgegebenen Maximalleistung begrenzt.

8. Verfahren nach Anspruch 7, wobei der dritte Schritt (30) die Ausgangsleistung der Batterie (BR1) auf 40% oder 50% oder 60% der maximalen Leistung begrenzt, die von dieser Batterie (BR1) abgegeben wird.

9. Steuervorrichtung (DC), **dadurch gekennzeichnet, dass** sie die Mittel zur Erfassung, zur Verarbeitung durch in einem Speicher gespeicherte Software-Befehle sowie die zur Durchführung des Verfahrens nach einem der vorhergehenden Ansprüche erforderlichen Steuermittel umfasst.

## Claims

1. Method for controlling a vehicle battery, comprising:
- the battery (BR1),
- means for measuring and monitoring a temperature (T) of the battery (BR1),
- means for cooling (E1) the battery (BR1),
- a second battery BR2 which supplies the coolant (E1),
said method carrying out:
- a first step (10) which controls the coolant (E1) when regulated to a temperature setpoint of the battery (BR1) when the temperature (T) of the battery (BR1) is below a first upper threshold (Ts1),
- a second step (20) which actuates the coolant (E1) to its maximum when this temperature (T) exceeds the first high threshold (Ts1),
**characterized in that** Method, when the temperature (T) exceeds a second high threshold value (Ts2), which is substantially greater than the first high threshold value (Ts1), carries out a third step (30), which simultaneously
- limits the output power of the main battery (BR1), andÂ- keeps the coolant (E1) at the maximum of its cooling possibilities, and when the temperature (T) exceeds a third high threshold value (Ts3), which is substantially greater than the second high threshold value (Ts2), carries out a fourth step (40), which simultaneously causes: - reduction of the output and input power of the battery (BR1) to zero, - maintenance of the coolant (E1) to a maximum of its cooling possibilities.

2. Method according to the preceding claim, carrying out a driver warning step (200) which causes him to consume less power as long as the temperature (T) is strictly above the first upper threshold (Ts1).

3. Method according to any preceding claim, wherein the method exits the second step (20) to return to the first step (10) when the temperature (T) returns again strictly below a first low threshold (Tm1) strictly below the first high threshold (Ts1).

4. Method according to any preceding claim, wherein the method exits the third step (30) to return to the first step (10) when the temperature (T) falls back again strictly below a second low threshold (Tm2) which is strictly below the second high threshold (Ts2).

5. Method according to any preceding claim, wherein the vehicle comprises means for recovering electrical energy during braking which charges the battery (BR1), the third step (30) further blocking the means for recovering electrical energy.

6. Method according to one of the preceding claims, wherein the method returns from the fourth step (40) to the first step (10) when the temperature (T) returns again strictly below a third low threshold value (Tm3) which lies strictly below the third high threshold value (Ts3).

7. Method according to one of the preceding claims, wherein the third step (30) limits the output power of the battery (BR1) to 40 to 60% of the maximum power output by this battery (BR1).

8. Method according to claim 7, wherein said third step (30) limits the output power of said battery (BR1) to 40% or 50% or 60% of the maximum power output from said battery (BR1).

9. Control device (DC), **characterized in that** it comprises the detection means, for processing by software commands stored in a memory, and the control means necessary for carrying out the method according to any one of the preceding claims.
